# NEUE EUROPÄISCHE PATENTSCHRIFT

(11) **EP 0 304 718 B2**
(45) Veröffentlichungstag und Bekanntmachung des Hinweises auf die Entscheidung über den Einspruch: **10.06.1998**
(45) Hinweis auf die Patenterteilung: 06.10.1993
(21) Anmeldenummer: 88112920.9
(22) Anmeldetag: 09.08.1988
(51) Int. Cl.: C08G 18/12, C09J 175/00, C08G 18/28, C08G 18/32

(54) **Verfahren zur Herstellung wässriger Lösungen und Dispersionen von Polyisocyanat-Polyadditionsprodukten sowie ihre Verwendung als Klebstoff**
Process for the preparation of solutions and dispersions of polyisocyanate-polyaddition products and use of them as adhesives
Procédé pour la préparation de solutions et dispersions de polymüres d'addition de polyisocyanates et leur utilisation comme adhésifs

(30) Priorität: 22.08.1987 DE 3728140
(43) Veröffentlichungstag der Anmeldung: 01.03.1989
(73) Patentinhaber: BAYER AG, 51368 Leverkusen (DE)
(72) Erfinder: Hilken, Günter, Dr., D-5000 Köln 80 (DE); Henning, Wolfgang, Dr., D-5067 Kürten (DE); Meckel, Walter, Dr., D-4040 Neuss (DE); Hombach, Rudolf, Dr., D-5090 Leverkusen 1 (DE)

(56) Entgegenhaltungen:
- EP-A- 0 003 521
- EP-A- 0 004 927
- EP-A- 0 148 970
- EP-A- 0 206 059
- CA-B- 1 131 376
- DE-B- 2 624 442

## Beschreibung

Die vorliegende Erfindung betrifft ein Verfahren zur Herstellung wäßriger Lösungen und Dispersion von speziellen Polyisocyanat-Polyadditionsprodukten, die sich hervorragend als Klebstoff eignen, und ihre Verwendung als Klebstoff.

Wäßrige Lösungen und Dispersionen von Polyisocyanat-Polyadditionsprodukten, d. h. wäßrige Lösungen und wäßrige Lösungen und wäßrige Dispersionen von Polyurethanen und von Polyurethan-Polyharnstoffen sind bekannt. Ihre Herstellung wird beispielsweise beschrieben in: DE-PS 880 485, DE-AS 1 044 404, US-PS 3 036 998, DE-PS 1 178 586, DE-PS 1 134 946, DE-AS 1 237 306, DE-OS 1 595 602, US-PS 3 756 992, DE-OS 2 019 324, DE-OS 2 035 732, DE-OS 2 446 440, US-PS 3 479 310 und Angewandte Chemie 82,35 (1970).

Bei der Verwendung solcher Dispersionen zum Kleben von nichtsaugfähigen Substanzen wie z. B. Gummi, Metall, Weich-PVC, wird zur Vermeidung des Einschlusses von Wasser nach dem Wärmeaktivierverfahren gearbeitet. Hierbei wird die Dispersion auf das Substrat aufgebracht und nach vollständiger Verdunstung des Wassers die Klebstoffschicht in einen klebfähigen Zustand überführt.

Ein wesentlicher Nachteil der Dispersionen des genannten Standes der Technik ist darin zu sehen. daß die für die Aktivierung der Klebschicht notwendige Temperatur so hoch ist, daß häufig eine Schädigung des Substrates eintritt. So lassen sich z. B. Formsohlen aus thermoplastischem Kautschuk mit den z. Z. vorhandenen Polyurethan-Dispersionen nicht zufriedenstellend kleben, da bei den erforderlichen Temperaturen zur Aktivierung der Klebschicht eine Verformung des Sohlenmaterials eintritt.

Bemühungen, die Aktivierungstemperatur durch Zugabe von Lösungsmitteln, Weichmachern oder Harzen zu verringern, war mit einer unerwünschten Abnahme der Wärmefestigkeit der Klebungen verbunden.

Die in DE-OS 2 804 609 beschriebene Verwendung von solchen Polyurethandispersionen als Klebstoff, die unter Verwendung von aliphatischen Diisocyanaten bei der Herstellung der Polyurethane hergestellt worden sind, führten zwar zu Klebschichten einer guten Aktivierbarkeit, jedoch trocknen diese Dispersionen bei Zimmertemperatur nicht homogen sondern schuppenförmig, d. h. nicht zusammenhängend. Dies führt insbesondere bei längerer Einwirkung von Feuchtigkeit zu einem starken Abfall der Klebkraft.

In der DE-OS 3 630 045 wird ein Klebstoff auf Basis einer Polyurethandispersion beschrieben, wobei zur Herstellung des Polyurethans ein Gemisch mindestens zweier aliphatischer und/oder cycloaliphatischer Diisocyanate eingesetzt wird.

Daraus frisch hergestellte Klebstoffilme zeichnen sich durch gute Aktivierbarkeit aus. Bei Lagerung von mit diesem Klebstoff kaschierten Teilen, wie dies in der industriellen Fertigung üblich ist, verlieren diese Filme innerhalb weniger Stunden jedoch die gute Aktivierbarkeit.

Aus EP-0 004 927 sowie aus EP-0 148 970 sind in Wasser lösliche bzw. dispergierbare Polyurethan, Polyharnstoff-Produkte mit ionischen Gruppen bekannt Derartige Produkte sind jedoch als Klebstoffe nicht geeignet; sie werden im wesentlichen im Lack- und Beschichtungsbereich eingesetzt.

Es besteht daher ein Bedarf an neuen Lösungen und Dispersionen von Polyisocyanat-Polyadditionsprodukten, die als Klebstoff besser geeignet sind als die Lösungen und Dispersionen des Standes der Technik.

Gegenstand der Erfindung ist ein Verfahren zur Herstellung von Dispersionen von Polyisocyanat-Polyadditionsprodukten gemäß Anspruch 1.

Gegenstand der Erfindung sind auch deren Verwendung als Klebstoffe.

Im Rahmen der Erfindung umfaßt der Begriff "Polyurethan" auch Polyurethan-Polyharnstoffe, d. h. hochmolekulare Verbindungen, die neben Urethan- auch Harnstoffgruppen aufweisen.

Für das erfindungsgemäße Verfahren als Ausgangsmaterialien a) geeignete organische Polyisocyanate sind beliebige organische Verbindungen, die mindestens zwei freie Isocyanatgruppen aufweisen. Vorzugsweise werden Diisocyanate X (NCO)₂ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugter Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylencyclohexan (Isophorondiamin). 4.4'-Diisocyanatodicyclohexylmethan, 4,4'-Diisocyanato-dicyclohexylpropan-(2,2), 1,4-Diisocyanatobenzol, 2,4-Diisocyanatotoluol, 2,4-Diisocyanato-diphenylmethan, 2,6-Diisocyanatotoluol, 4,4'-Diisocyanato-diphenylmethan, p-Xylylen-diisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Reaktionspartner für die Polyisocyanate a) sind
b) organische Polyhydroxylverbindungen des Molekulargewichtsbereichs 500 bis 6.000 - bevorzugt Polyesterpolyole - gegebenenfalls
c) mehrwertige Alkohole, Polyhydroxy- und/ oder Aminoalkohole des Molekulargewichtsbereichs 61 bis 499. gegebenenfalls
d) innerhalb von Polyetherketten eingebaute Ethylenoxideinheiten aufweisende einwertige Alkohole des Molekulargewichtsbereichs 800 bis 10.000 und
e) aminische Kettenverlängerungsmittel.

Die Komponente b) kann bevorzugt Polyesterpolyole des Molekulargewichtsbereichs 500 bis 6.000 der aus der Polyurethanchemie bekannten Art enthalten, z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiel hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäuren, gegebenenfalls in Mischung mit monomeren Fettsäuren, Terephthalsäuredimethylester, Terephthalsäure-bis-glykolester.

Als mehrwertige Alkohole kommen z. B. Ethylenglykol. Propylenglykol-(1,2) und -(1,3), Butylenglykol-(1,4), -(1,3) und -(2,3), Hexandiol-(1,6), Octandiol-(1,8), Neopentylglykol, Cyclohexandimethanol, (1,4-Bis-hydroxymethylcyclohexan), 2-Methyl-1,3-propandiol, Glycerin. Trimethylolpropan, Hexantriol-(1,2,6), Butantriol-(1,2,4), ferner Diethylenglykol. Triethylenglykol, Tetraethylenglykol, Polyethylenglykol, Dipropylenglykol, Polypropylenglykol. Dibutylenglykol und Polybutylenglykol in Frage. Die Polyester können anteilig endständige Carboxylgruppen aufweisen. Auch Polyester aus Lactonen sind einsetzbar.

Bei den besonders bevorzugten Polyesterpolyolen, insbesondere Polyesterdiolen handelt es sich um Dicarbonsäurepolyesterpolyole, deren Dicarbonsäure-Komponente zu mindestens 50 Carboxyläquivalent-%, besonders bevorzugt ausschließlich aus Adipinsäure und deren Polyol-Komponente vorzugsweise zu mindestens 50 Hydroxyläquivalent-%, besonders bevorzugt ausschließlich aus 1,4-Dihydroxybutan und 1,6-Dihydroxy-hexan bestehen.

Auch Hydroxylgruppen aufweisende Polycarbonate kommen als Komponente b) oder als Bestandteil der Komponente b) in Betracht, z. B. solche, die durch Umsetzung von Diolen wie Propandiol-(1,3), Butandiol-(1,4) und/oder Hexandiol-(1,6), Diethylenglykol, Triethylenglykol, Tetraethylenglykol mit Dicarbonaten, z. B. Diphenylcarbonat oder Phosgen, hergestellt werden können. Beliebige Gemische der beispielhaft genannten Polyhydroxylverbindungen können ebenfalls als Komponente b) verwendet werden.

Bei den beim erfindungsgemäßen Verfahren gegebenenfalls mitzuverwendenden Komponenten c) handelt es sich um organische Polyhydroxylverbindungen (bevorzugt mit 2 bis 3 Hydroxylgruppen) und Aminoalkohole des Molekulargewichtsbereichs 61 bis 499, vorzugsweise 61 bis 250. Diese Verbindungen werden im allgemeinen in einer Menge von 0 bis 75 Hydroxyl- bzw. Aminäquivalent-%, bezogen auf die Gesamtmenge der Komponenten b) und c) mitverwendet. Es handelt sich bei diesen Komponenten c) um stickstofffreie, gegebenenfalls Ether- oder Estergruppen aufweisende Polyole und um Aminoalkohole.

Zu den erstgenannten Komponenten c) gehören beispielsweise einfache, mehrwertige Alkohole wie Ethylenglykol, Propylenglykol, Propandiol-(1,3), Butandiol-1,4, Hexandiol-1,6, Trimethylolpropan und Glycerin.

Auch niedermolekulare Polyesterdiole wie Adipinsäure-bis-(hydroxyethyl)-ester und niedermolekulare, Ethergruppen aufweisende Diole wie Diethylenglykol, Triethylenglykol, Tetraethylenglykol, propoxiliertes 4,4'-(Bis-hydroxyphenyl)-propan-2,2. Dipropylenglykol, Tripropylenglykol oder Tetrapropylenglykol können als Komponente c) mitverwendet werden.

Geeignete Aminoalkohole sind beispielsweise Ethanolamin, Propanolamin, N-Methyl-diethanolamin, N-Methyl-diisopropanolamin. N-Ethyl-diethylenamin, N-Ethyl-diisopropanolamin und N,N'-Bis-(2-hydroxylethyl)-perhydropyrazin.

Beliebige Gemische der hier beispielhaft genannten Verbindungen können ebenfalls als Komponente c) verwendet werden.

Gegebenenfalls können als Teil der Komponenten b) und/oder c) (in Abhängigkeit vom Molekulargewicht) auch Diole mitverwendet werden, die seitenständige Polyetherketten aufweisen, die zumindest zu 40, vorzugsweise zumindest zu 65 Mol-% aus Ethylenoxideinheiten und zum Rast aus Propylenoxideinheiten bestehen. Derartige nichtionisch-hydrophile Aufbaukomponenten sind beispielsweise in US-PS 3 905 929 oder US-PS 4 190 566 beschrieben.

Gegebenenfalls mitzuverwendende Komponenten d) sind einwertige Polyetheralkohole des Molekulargewichtsbereichs 800 bis 10.000, vorzugsweise 1.000 bis 5.000. die durch Alkoxylierung von einwertigen Startermolekülen, wie beispielsweise Methanol, Ethanol, n-Butanol oder Phenol, erhältlich sind. wobei als Alkoxylierungsmittel Ethylenoxid oder Gemische von Ethylenoxid mit anderen Alkylenoxiden, wie insbesondere Propylenoxid, eingesetzt werden.

Im Falle der Verwendung von Alkylenoxidgemischen enthalten diese jedoch mindestens 40, vorzugsweise mindestens 65 Mol-%, Ethylenoxid. Die gegebenenfalls erfolgende Mitverwendung von derartigen Komponenten d) erfolgt, um in die erfindungsgemäßen Verfahrensprodukte endständig hydrophile, innerhalb von Polyetherketten eingebaute Ethylenoxid-Einheiten einzubauen.

Erfindungsgemäß besteht die Komponente e) aus primären und/oder sekundären Monoaminen oder aus Gemischen derartiger Monoamine mit primären und/oder sekundären Diaminen. Die mittlere AminoFunktionalität der Komponente e) liegt bei 1 bis 1,9, bevorzugt 1,7.

Vorzugsweise werden Gemische aus Mono- und Diaminen verwendet, deren mittlere Amino-Funktionalität bei 1,1 bis 1,9 liegt. Die Komponente e) wird in einer solchen Menge eingesetzt, daß das Äquivalentverhältnis von NCO-Gruppen im NCO-Prepolymer zu NCO-reaktiven Aminogruppen zwischen 1,05 : 1 und 2,5 : 1, bevorzugt zwischen 1,05 : 1 und 1,5 : 1 und ganz besonders bevorzugt zwischen 1,05 : 1 und 1,4 : 1, und von NCO-Gruppen im NCO-Prepolymer zur Gesamtmenge der in e) gegenüber Isocyanaten aktiven Wasserstoffe zwischen 0,5 : 1 und 0,98 : 1, besonders bevorzugt zwischen 0,6 : 1 und 0,9 : 1, liegt.

Der Begriff "Diaminoverbindungen" bzw. "Diamine" soll auch Hydrazin und Hydrazinderivate umfassen, die zwei gegenüber Isocyanatgruppen reaktionsfähige Aminogruppen aufweisen. Geeignete Diamine sind solche des Molekulargewichtsbereichs 32 bis 500, vorzugsweise 60 bis 300, wie beispielsweise Ethylendiamin, Hexamethylendiamin, Isophorondiamin. 2.4-Diaminotoluol, 4,4'-Diaminodiphenylmethan, N,N'-Dimethylethylendiamin, 4,4'-Diaminocyclohexylmethan, Piperazin, 2,5-Dimethylpiperazin, 1,4-Diaminocyclohexan, 1,2-Diamino-propan, Hydrazin(hydrat), Diaminosulfonate der in CA-PS 928 323 beschriebenen Art, oder das Natriumsalz der N-(2-Aminoethyl)-2-aminopropionsäure.

Geeignete Monoaminoverbindungen sind beliebige organische Verbindungen mit einer primären oder sekundären Aminogruppe. Das Molekulargewicht der Monoaminoverbindungen liegt bis 500, vorzugsweise 300. Die Monoamine können auch noch andere. gegenüber Isocyanatgruppen reaktionsfähige Gruppen, insbesondere Hydroxylgruppen, aufweisen. Dies bedeutet, daß u. a. als Komponente e) bzw. als Teil der Komponente e) auch Aminoalkohole der bereits oben beispielhaft genannten Art verwendet werden können. Typische Beispiele von geeigneten Monoaminoverbindungen sind, Ethylamin, n-Butylamin, Di-n-butylamin. N-Methylethanolamin, Diethanolamin, 3-Amino-1-propanol, 2-(3-Aminopropyl)-methylamino-ethanol, 2-Amino-2-hydroxymethyl-1,3-propandiol oder N-Methyl- bzw. -Aminoessigsäure und ihre Salze.

Besonders bevorzugt werden solche primären und/oder sekundären Aminoverbindungen eingesetzt. die weitere, jedoch nicht aminische, gegenüber Isocyanaten reaktionsfähige Gruppen enthalten. Dies sind zum Beispiel Ethanolamin, Diethanolamin oder 2-Amino-2-hydroxymethyl-1,3-propandiol.

Die aminischen Komponenten e) können beim Verfahren auch in blockierter Form, d. h. in Form der entsprechenden Ketimine (DE-OS 2 725 589), Ketazine (DE-OS 2 811 148, US-PS 4 269 748) oder Aminsalze (US-PS 4 292 226) zum Einsatz gelangen.

Auch Oxazolidine, wie sie beispielsweise gemäß DE-OS 2 732 131 bzw. US-PS 4 192 937 zum Einsatz gelangen, stellen verkappte Amine dar, die beim erfindungsgemäßen Verfahren in Analogie zu den genannten Veröffentlichungen zur Kettenverlängerung der NCO-Prepolymeren eingesetzt werden können. Bei der Verwendung derartiger verkappter Amine werden diese im allgemeinen mit den NCO-Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Amine freigesetzt werden.

Das den erfindungsgemäßen Lösungen und Dispersionen zugrundeliegende Polyurethan weist, bezogen auf Feststoff, einen Gehalt von 2 bis 200, vorzugsweise von 2 bis 150 und besonders bevorzugt von 5 bis 100 Milliäquivalenten pro 100 g Faststoff an Carboxylat- und/oder Sulfonatgruppen auf.

Der Einbau derartiger ionischer Zentren gelingt in an sich bekannter Weise durch Mitverwendung von Komponenten mit ionischen Gruppen (Carboxylat- und/oder Sulfonatgruppen) oder mit "potentiellen" ionischen Gruppen (Carboxyl- und/oder Sulfonsäuregruppen). Im Falle der Verwendung von Verbindungen mit "potentiellen" ionischen Gruppen der genannten Art erfolgt die Überführung der potentiellen ionischen Gruppen in die entsprechenden ionischen Gruppen vor- oder gleichzeitig mit der Vermischung des Polyurethans mit dem Wasser der Herstellung der Lösung bzw. Dispersion, beispielsweise mittels tertiärer Amine wie z. B. Triethylamin oder mittels anorganischen Basen wie z. B. Natronlauge.

Zu den anionischen bzw. "potentiell" anionischen Komponenten gehören beispielsweise die Sulfonatgruppen aufweisenden aliphatischen Diole gemäß DE-OS 2 446 440 oder DE-OS 2 437 218. Carboxylatgruppen oder in Carboxylatgruppen überführbare Carboxylgruppen aufweisenden Diolen und/oder Diaminosulfonate der in CA-PS 928 323 beschriebenen Art, wie z. B. Natriumsalz der N-(2-Aminoethyl)-2-aminoethansulfonsäure, die Dimethylolpropionsäure oder deren Salze, beispielsweise das entsprechende Triethylammoniumsalz oder das Natriumsalz der N-(2-Aminoethyl)-3-aminopropionsäure. In Abhängigkeit von der Art der gegenüber Isocyanatgruppen reaktionsfähigen Gruppen (Hydroxyl- bzw. Aminogruppen) und in Abhängigkeit vom Molekulargewicht dieser (potentiell) anionischen Komponenten stellen diese Komponenten einen Teil der Komponente b) [(potentiell) anionische Polyhydroxylverbindungen], der Komponenten c) [(potentiell) anionische niedermolekulare Polyhydroxylverbindungen] oder der Komponenten e) (Mischung aus Mono- und Diaminoverbindung) dar. Bei der Herstellung der Polyurethane ist es weitgehend unerheblich, ob die ionischen Gruppen durch Mitverwendung entsprechender Komponenten b), c) und/oder e) eingebaut werden.

Das dem erfindungsgemäßen Klebstoff zugrundeliegende Polyurethan kann, wie erwähnt, gegebenenfalls bis zu 25, vorzugsweise bis zu 15 Gew.-%, bezogen auf Feststoff, an innerhalb von end- und/oder seitenständig angeordneten Polyetherketten eingebaut vorliegenden Ethylenoxideinheiten aufweisen.

Die Herstellung derartiger Verbindungen kann gemäß den Verfahrensweisen der US-PS 3 905 929 oder US-PS 4 190 566 erfolgen. In Abhängigkeit vom Molekulargewicht dieser hydrophilen Aufbaukomponenten sind diese der Gruppe b) (Molekulargewicht mindestens 500) bzw. c) (Molekulargewicht unter 500) zuzuordnen.

Die Gesamtmenge an hydrophilen Zentren (anionische Gruppen und gegebenenfalls end- und/oder seitenständig angeordnete Polyetherketten mit eingebauten Polyethylenoxideinheiten) wird bei der Herstellung der Polyurethane stets so bemessen, daß die Löslichkeit bzw. Dispergierbarkeit der Polyurethane in Wasser gewährleistet ist. Die Mitverwendung von externen Emulgatoren wäre zwar im Prinzip denkbar, ist jedoch nicht bevorzugt. Gegebenenfalls mitzuverwendende Emulgatoren sind beispielsweise ethoxyliertes Nonylphenol. Polyoxyethylenlaurylether oder Polyoxyethylenlaurat. -oleat oder -stearat, wobei diese Zusatzmittel im allgemeinen 8 - 50 Polyoxyethyleneinheiten pro Molekül aufweisen. Falls derartige externe Emulgatoren mitverwendet werden, können sie den zu dispergierenden Polyurethanen oder NCO-Prepolymeren vor dem Dispersionsschritt zugesetzt werden.

Bei der Herstellung der Polyurethane können gegebenenfalls Lösungsmittel mitverwendet werden. Hierbei handelt es sich vorzugsweise um organische Lösungsmittel. Beispiele sind Benzol, Toluol, Essigsäureethylester. Aceton, Methylethylketon, Diethylether, Tetrahydrofuran, Essigsäuremethylester, Acetonitril, Chloroform, Methylenchlorid. Tetrachlorkohlenstoff, 1,2-Dichlorethan, 1,1,2-Trichlorethan, Tetrachlorethylen oder N-Methylpyrrolidon.

Bevorzugt werden mit Wasser mischbare Lösungsmittel, ganz besonders bevorzugt Aceton verwendet.

Bei der Herstellung der Polyurethane wird nach den altbekannten Methoden der Herstellung von wäßrigen Polyurethandispersionen bzw. -lösungen verfahren. Die bedeutet, daß entweder der Aufbau des Polyurethanmoleküls zumindest teilweise in Gegenwart von Wasser erfolgt, so daß unmittelbar eine wäßrige Lösung bzw. Dispersion erhalten wird, oder daß das erfindungsgemäße Verfahren in Abwesenheit von Wasser bis Beendigung des Aufbaus der Makromoleküle durchgeführt wird, worauf sich eine an sich bekannte Überführung des Polyurethans in eine wäßrige Lösung bzw. Dispersion anschließt.

Vorzugsweise verfährt man zur Herstellung der erfindungsgemäßen Lösungen und Dispersionen bzw. bei der Durchführung des erfindungsgemäßen Verfahrens nach einer der folgenden Varianten:
1. gemäß dem "Acetonverfahren" [in Analogie zu der Lehre der DE-OS 1 495 745 (US-PS 3 479 310) bzw. zu der DE-OS 1 495 847 (GB-PS 1 076 788)];
2. eine weitere Ausführungsform der Herstellung der wäßrigen Polyurethandispersion entspricht der aus DE-OS 2 725 589, US-PS 4 269 748, US-PS 4 192 937 oder US-PS 4 292 226 bekannten Verfahrensweisen;
   Diese Verfahrensweisen der Herstellung der Polyurethandispersion können auch entsprechend der Lehre der US-PS 4 192 937 bzw. der Lehre der US-PS 4 929 226 abgewandelt werden.
3, Grundsätzlich ist es auch möglich, wäßrige Polyurethanlösungen oder -dispersionen der in den erfindungsgemäßen Klebstoffen vorliegenden Art nach der Verfahrensweisen der US-PS 3 756 992, d. h. nach dem "Schmelzdispergier-Verfahren" herzustellen.

Ganz besonders bevorzugt werden die erfindungsgemäßen Polyurethanlösungen oder -dispersionen nach der oben unter 1. genannten Methode hergestellt. Bei der Herstellung der wäßrigen Polyurethanlösungen oder -dispersionen wird im übrigen die Menge des Wassers so bemessen, daß 10 - 60, vorzugsweise 20 bis 50 gew.-%ige Lösungen bzw. Dispersionen der Polyurethane anfallen. Den Lösungen bzw. Dispersionen können die üblichen Hilfs- und Zusatzstoffe beigemischt werden, wie sie beispielsweise in US-PS 3 479 310, Kolonne 8. Zeile 40, Kolonne 9, Zeile 10 beschrieben sind.

Bevorzugt werden den erfindungsgemäßen Lösungen und Dispersionen vor der Anwendung Polyisocyanatverbindungen mit mindestens zwei freien Isocyanatgruppen zugesetzt.

Besonders bevorzugt werden Polyisocyanatverbindungen eingesetzt. die in Wasser emulgierbar sind. Dies sind z. B. die in EP 206 059 und DE-OS 3 112 117 beschriebenen Verbindungen. Eingesetzt werden die Polyisocyanatverbindungen in einer Menge von, bevorzugt 0,5 - 10 Gew.-%, besonders bevorzugt 1,5 - 6 Gew.-%, bezogen auf Lösung bzw. Dispersion. Durch diesen Zusatz ist eine erhebliche Verbesserung der Wärmefestigkeit von Klebungen, die unter Anwendung der erfindungsgemäßen Lösungen und Dispersionen hergestellt werden, zu erzielen.

Die im wesentlichen aus den beschriebenen Polyurethanlösungen oder -dispersionen bestehenden und gegebenenfalls Hilfsmittel der genannten beispielhaften Art enthaltenden, erfindungsgemäßen Klebstoffe eignen sich zum Verkleben beliebiger Substrate wie z. B. Papier, Pappe, Holz, Metall oder Leder, bevorzugt eignen sich die erfindungsgemäßen Klebstoffe jedoch zum Kleben von Gummimaterialien, von Kunststoffen, u. a. Polyurethan-Schaumstoffe mit kompakter Oberfläche und - soweit das der Herstellung der in Polyurethanen eingesetzten Reaktionsgemischen in seinen speziellen Zusammensetzungen gemäß DE-PS 1 256 822 entspricht - zum Verkleben von weichmacherhaltigen Homo- oder Mischpolymerisaten des Vinylchlorids, vor allem zum Verkleben von Sohlen aus diesen Materialien und Schuhschäften aus Leder und Syntheseleder.

Die Verarbeitung des erfindungsgemäßen Klebstoffs erfolgt nach den bekannten Methoden der Klebstofftechnologie bezüglich der Verarbeitung von wäßrigen Dispersions- bzw. Lösungsklebstoffen.

Die nachstehenden Beispiele dienen deren weiteren Erläuterungen der Erfindung. "Milliäquivalentprozent" bedeutet Milliäquivalente pro 100 g Feststoff.

### Beispiele

### Beispiel 1

Ansatz:
360,0 g Adipinsäure-Butandiol-Polyester (OHZ 50) (PE)
23,35 g Hexamethylendiisocyanat (H)
15,3 g Isophorondiisocyanat (IPDI)
800 g Aceton
12,9 g Natriumsalz der N-(2-Aminoethyl)-2-aminoethan-sulfonsäure (45 %ig in Wasser) (AAS-Salz)
2,1 g Diethanolamin
565 g Wasser

### Durchführung:

Der Polyester (PE) wird 30 Minuten bei 120°C im Vakuum unter Rühren entwässert und auf 80°C abgekühlt. Nach Zugabe von H und IPDI wird bei 80°C so lange gerührt, bis ein konstanter NCO-Wert von 0,9 - 1,01 % erreicht ist. Langsam wird Aceton zugegeben, wobei die Temperatur bei 50°C gehalten wird. In die homogene acetonische Lösung wird eine Lösung von AAS-Salz und Diethanolamin in 50 g Wasser bei 50°C eingerührt. Nach 7 Minuten wird mit Wasser dispergiert und anschließend sofort das Aceton abdestilliert.

Man erhält eine feinteilige Dispersion mit einem Feststoffgehalt von 40,2 % und einem pH-Wert von 7,9.

Mittlere Teilchengröße: 111 nm (Laserkorrelationsspektroskopie
NCO/NH = 1.2; NCO/NH + OH = 0,8.

### Vergleichsbeispiel 2a

Ansatz:
337,50 g Adipinsäure-Butandiol-Polyester (OHZ 50) (PE)
1,34 g Dimethylolpropionsäure (DMPA)
26,87 g Hexamethylendiisocyanat (H)
17,76 g Isophorondiisocyanat (IPDI)
800,00 g Aceton
14,04 g Natriumsalz der N-(2-Aminoethyl)-2-aminoethan-sulfonsäure (45 %ig in Wasser) (AAS-Salz)
0.78 g Ethylendiamin (ADA)
557,00 g Wasser
   NCO/NH-Verhältnis bei der Kettenverlängerungsreaktion: 1 : 0,7

### Durchführung:

Der Polyester wird 30 Minuten bei 120°C im Vakuum unter Rühren entwässert und auf 85°C abgekühlt. Es wird DMPA eingerührt und nach 5 Minuten H und IPDI zugegeben. Es wird solange bei 85°C gerührt, bis ein konstanter NCO-Wert von 1,58 % erreicht ist. Langsam wird Aceton zugegeben, wobei die Temperatur bei 50°C gehalten wird. Der NCO-Wert der acetonischen Lösung beträgt 0,47 %. In die homogene acetonische Lösung wird eine Lösung von AAS und ADA in 28 g Wasser bei 50°C eingerührt. Nach 5 Minuten wird mit Wasser dispergiert und anschließend sofort das Aceton abdestilliert.

Man erhält eine feinteilige Dispersion mit einem Feststoffgehalt von 42,9 %, einer Fordbecherviskosität (4 mm Düse) von 13,8 sec und einem pH-Wert von 5,5.

### Vergleichsbeispiel 2b

Ansatz:
337,50 g Adipinsäure-Butandiol-Polyester (OHZ 50) (PE)
2,03 g Dimethylolpropionsäure (DMPA)
25,09 g Hexamethylendiisocyanat (H)
16,54 g Isophorondiisocyanat (IPDI)
835.00 g Aceton
18,17 g Natriumsalz der N-(2-Aminoethyl)-2-aminoethan-sulfonsäure (45 %ig in Wasser) (AAS-Salz)
1,58 g Triethylamin (TEA)
619,00 g Wasser
   NCO/NH-Verhältnis: 1:0,83

### Durchführung:

Das Prepolymer wird wie in Beispiel 2a hergestellt und in Aceton gelöst. Bei 50°C wird mit AAS verlängert, nach 5 Minuten mit TEA versalzt und nach weiteren 5 Minuten mit Wasser dispergiert. Das Aceton wird unmittelbar anschließend abdestilliert.

Es entsteht eine feinteilige Dispersion mit einem Feststoffgehalt von 41,7 %, einer Fordbecherviskosität (4 mm Düse) von 20,8 sec und einem pH-Wert von 6.

### Vergleichsbeispiel 2c

Ansatz:
337,50 g Adipinsäure-Butandiol-Polyester (OHZ 50) (PE)
1,34 g Dimethylolpropionsäure (DMPA)
36,29 g Hexamethylendiisocyanat (H)
5,33 g Isophorondiisocyanat (IPDI)
800,00 g Aceton
19,00 g Natriumsalz der N-(2-Aminoethyl)-2-aminoethan-sulfonsäure (45 %ig in Wasser) (AAS-Salz)
0,50 g Ethylendiamin (ADA)
580,00 g Wasser
   NCO/NH-Verhältnis: 1 : 0,8

### Durchführung:

(vergl. Beispiel 2a)

Es entsteht eine feinteilige Dispersion mit einem Feststoffgehalt von 45,7 %, einer Fordbecherviskosität (4 mm Düse) von 22,3 sec und einem pH-Wert von 6.

### Vergleichsbeispiel 2d

Ansatz:
337,50 g Adipinsäure-Butandiol-Polyester (OHZ 50) (PE)
1,34 g Dimethylolpropionsäure (DMPA)
4,03 g Hexamethylendiisocyanat (H)
47,95 g Isophorondiisocyanat (IPDI)
800,00 g Aceton
13,17 g Natriumsalz der N-(2-Aminoethyl)-2-aminoethan-sulfonsäure (45 %ig in Wasser) (AAS-Salz)
0,36 g Ethylendiamin (ADA)
540,00 g Wasser
   NCO/NH-Verhältnis: 1 : 0,8

### Durchführung:

(vergl. Beispiel 2a)

Es entsteht eine feinteilige Dispersion mit einem Feststoffgehalt von 41 %, einer Fordbecherviskosität (4 mm Düse) von 12,4 sec und einem pH-Wert von 6.

Mit den vorstehend beschriebenen Dispersionen wurden Klebungen hergestellt. Als zu verklebender Werkstoff diente ein 4 mm dickes, transparentes PVC-Material mit einem Gehalt von 30 % Dioctylphthalat als Weichmacher. Vor dem Aufbringen der Dispersion wurden die zu klebenden Oberflächen mit Schleifband der Körnung 40 gründlich gerauht. Die von Schleifstaub befreiten Werkstoffe wurden mit einer 0,1 mm dicken Klebstoffschicht versehen und ca. 30 Minuten bei Zimmertemperatur abgelüftet.

### Ermittlung der Aktiviertemperatur

Zur Ermittlung der Aktiviertemperatur wurden 1 cm breite Probestreifen 1 Stunde bei der gewünschten Temperatur im Trockenschrank gelagert. Nach den in Tabelle 1 angegebenen Zeiten wurden daraufhin 2 Klebestreifen unter leichtem Fingerdruck so zusammengelegt, daß eine überlappte Fläche von 1 x 1 cm entstand. Eine Klebung wurde als gut beurteilt, wenn unter diesen Bedingungen eine vollflächige Koaleszenz der beiden Klebstoffoberflächen eintrat und die Klebung unmittelbar nach ihrer Herstellung nur unter deutlichem Kraftaufwand zu trennen war. Die hierzu benötigten Temperaturen sind in nachstehender Tabelle 1 angegeben.

**Tabelle 1**

| Aktiviertemperaturen in °C | | | | |
|---|---|---|---|---|
| Bsp.Nr. | Aktiviertemperatur | | | |
| | sofort | nach 3 h | nach 5 h | nach 24 h |
| 1 | 40 | 40 | 40 | 40-45 |
| 2a | 45 | 50 | 70-75 | >90 |
| 2b | 40 | 50-55 | 70-75 | >90 |
| 2c | 40 | 55 | 70-75 | >90 |
| 2d | 45 | 50 | 70 | >90 |

### Beispiel 3

Durch Einrühren von 3 g emulgierbarem Isocyanat (KA 8365, Bayer AG) in 100 g Dispersion nach Beispiel 1 wird eine Klebstoffmischung hergestellt.

### Prüfung der Wärmefestigkeit

Mit der Dispersion aus Beispiel 1 und der Klebstoffmischung aus Beispiel 3 werden 2,5 cm breite Streifen des obengenannten Weich-PVC-Werkstoffs mit einer 0,1 mm dicken Klebstoffschicht versehen.

Nach einer Ablüftzeit von 5 Stunden werden die Klebstoffoberflächen (Beispiel 1 und 3) durch Strahlungswärme innerhalb von 4 Sekunden auf eine Temperatur von 50°C gebracht. Danach werden die Klebstreifen so zusammengelegt. daß eine überlappte Fläche von 2.5 x 2,5 cm vorliegt. Die Prüfkörper werden 10 Sekunden mit einem Druck von 0,4 MPa gepreßt.

Zur Ermittlung der Wärmefestigkeit wurden die jeweils 3 Tage bei Zimmertemperatur gelagerten Prüfkörper einem Scherversuch unterworfen. Hierbei wird der Prüfkörper mit einer Masse von 11 kg belastet. Nach 20 minütigem Tempern bei 40°C wird durch Erhöhen der Temperatur umd 0,25°C pro Minute die Temperatur ermittelt. bei der die Klebung versagt. Folgende Temperaturen wurden erreicht;
- Beispiel 3:: 88°C
- Beispiel 1:: 60°C

## Patentansprüche

1. Verfahren zur Herstellung von 10 bis 60 Gew.-%igen wäßrigen Lösungen und Dispersionen von Polyisocyanat-Polyadditionsprodukten/durch Umsetzen von
a) organischen Polyisocyanaten, gegebenenfalls unter gleichzeitiger Mitverwendung von untergeordneten Mengen an organischen Monoisocyanaten, mit
b) organischen Polyhydroxylverbindungen des Molekulargewichtsbereichs 500 - 6.000,
c) gegebenenfalls mehrwertigen Alkoholen und/oder Aminoalkoholen des Molekulargewichtsbereichs 61 - 499 in einer Menge von 0 - 75 Hydroxyl/Aminäquivalent-%, bezogen auf die Gesamtmenge der Komponenten b) und c) und
d) gegebenenfalls einwertigen, innerhalb von Polyetherketten eingebaute Ethylenoxideinheiten aufweisenden Alkoholen mit einem Molgewicht von 800-10.000
unter Einhaltung eines NCO/OH-Äquivalentverhältnisses von 1,2 : 1 bis 2,5 : 1 und anschließender Umsetzung des so erhaltenen. Isocyanatgruppen aufweisenden Prepolymeren mit
e) aminischen Verbindungen
wobei
i) mindestens ein Teil der Komponenten b), c) und/oder e) eingebaute Sulfonat- und/oder Carboxylatgruppen oder in Sulfonat- und/oder Carboxylatgruppen durch eine Neutralisation überführbare Säuregruppen enthält, so daß die Polyisocyanat-Polyadditionsprodukte, gegebenenfalls nach einer durchgeführten Neutralisation der genannten potentiellen ionischen Gruppen einen Gehalt von 2 bis 200 Milliäquivalenten pro 100 g Feststoff an chemisch eingebauten Carboxylat- und/oder Sulfonatgruppen aufweisen.
ii) gegebenenfalls als Komponente b) und/oder als Komponente c) organische Dihydroxyverbindungen mit seitenständigen, innerhalb von Polyetherketten vorliegenden Ethylenoxideinheiten und/oder die Komponente d) in solchen Mengen mitverwendet werden, daß in den Polyisocyanat-Polyadditionsprodukten von 0 bis 25 Gew.-%, bezogen auf Feststoff, an innerhalb von end- und/oder seitenständig angeordneten Polyetherketten vorliegenden Ethylenoxideinheiten vorliegen und
iii) die Polyisocyanat-Polyadditionsprodukte durch Umsetzung der Isocyanatgruppen aufweisenden Prepolymere mit der Komponente e) in wäßrigem und/oder organischem Milieu hergestellt werden,
wobei als Komponente e) primäre und/oder sekundäre Monoaminoverbindungen, gegebenenfalls in Abmischung mit primären oder sekundären Diaminoverbindungen mit einem Molgewicht bis 500 unter Ausschluß von Ammoniak eingesetzt werden, wobei die mittlere Aminofunktionalität insgesamt 1 - 1,9 beträgt, das Äquivalentverhältnis von NCO-Gruppen im NCO-Prepolymer zu NCO-reaktiven Aminogruppen zwischen 1,05 : 1 und 2,5 :1 und von NCO-Gruppen im NCO-Prepolymer zur Gesamtmenge der gegenüber Isocyanaten aktiven Wasserstoffe zwischen 0,5 : 1 und 0,98 : 1 liegt.

2. Verwendung der wässrigen Lösungen und Dispersionen nach Anspruch 1 zur Herstellung von Klebstoffen.

3. Verwendung nach Anspruch 2, dadurch gekennzeichnet, daß die Komponente e) eine Mischung aus Di- und Monoaminoverbindungen darstellt.

4. Verwendung gemäß Anspruch 2, dadurch gekennzeichnet, daß den Lösungen und Dispersionen 0,1 - 20 Gew.-Teile, bezogen auf 100 g Lösung oder Dispersion, mindestens einer in Wasser emulgierbaren Polyisocyanatverbindung mit mindestens zwei freien Isocyanatgruppen zugesetzt werden.

5. Klebstoff auf Wasserbasis, enthaltend
100 Gew.-Teile Lösung oder Dispersion gemäß Anspruch 1 und
0,1 - 10 Gew.-Teile einer in Wasser emulgierbaren Polyisocyanatverbindung mit mindestens zwei freien Isocyanatgruppen.

## Claims

1. A process for the preparation of 10 to 60 wt.% aqueous solutions and dispersions of polyisocyanate polyaddition products by reaction of
a) organic polyisocyanates, optionally with simultaneous concomitant use of minor quantities of organic monoisocyanates, with
b) organic polyhydroxyl compounds having a molecular weight within the range of 500 to 6,000,
c) optionally polyhydric alcohols and/or aminoalcohols having a molecular weight within the range of 61 to 499, in a quantity of from 0 to 75 hydroxyl/amine equivalent-%, based on the total quantity of components b) and c), and
d) optionally monohydric alcohols having a molecular weight of from 800 to 10,000 and containing ethylene oxide units incorporated within polyether chains,
an NCO:OH equivalent ratio of 1.2:1 to 2.5:1 being maintained, and subsequent reaction of the resulting prepolymers containing isocyanate groups with
e) amine compounds,
wherein
i) at least a proportion of components b), c) and/or e) contain incorporated sulphonate and/or carboxylate groups or acidic groups convertible into sulphonate and/or carboxylate groups by neutralisation, so that the polyisocyanate polyaddition products, optionally after a neutralisation of the said potentially ionic groups has been carried out, contain 2 to 200 milliequivalents of chemically incorporated carboxylate and/or sulphonate groups per 100 g solids,
ii) organic dihydroxy compounds containing lateral ethylene oxide units present within polyether chains optionally employed as component b) and/or component c) are concomitantly used and/or component d) is concomitantly used in quantities such that the polyisocyanate polyaddition products contain from 0 to 25 wt.%, based on solids, of ethylene oxide units present within terminally and/or laterally arranged polyether chains and
iii) the polyisocyanate polyaddition products are prepared by reaction of the prepolymers containing isocyanate groups with component e) in aqueous and/or organic medium,
with primary and/or secondary monoamine compounds, optionally as a mixture with primary or secondary diamine compounds having a molecular weight of up to 500, excluding ammonia, being used as component e), with the average amino functionality being 1 to 1.9 in total, the equivalent ratio of NCO groups in the NCO prepolymer to amino groups reactive to NCO being between 1.05:1 and 2.5:1 and that of NCO groups in the NCO prepolymer to the total quantity of hydrogen atoms reactive to isocyanate groups being between 0.5:1 and 0.98:1.

2. The use of the aqueous solutions and dispersions according to claim 1 for the production of adhesives.

3. The use according to claim 2, characterised in that component e) is a mixture of diamine compounds and monoamine compounds.

4. The use according to claim 2, characterised in that from 0.1 to 20 parts by weight, based on 100 g solution or dispersion, of at least one polyisocyanate compound emulsifiable in water and having at least two free isocyanate groups are added to the solutions and dispersions.

5. A water-based adhesive, containing
100 parts by weight of the solution or dispersion according to claim 1 and
from 0.1 to 10 parts by weight of a polyisocyanate compound emulsifiable in water and having at least two free isocyanate groups.

## Revendications

1. Procédé pour fabriquer des solutions et dispersions aqueuses de 10 à 60% en poids de produits de polyaddition de polyisocyanate en faisant réagir
a) des polyisocyanates organiques, éventuellement en utilisant également des quantités subsidiaires de mono-isocyanates organiques, avec
b) des composés polyhydroxylés d'une gamme de poids moléculaire de 500 à 6000,
c) éventuellement des alcools multifonctionnels et/ou des amino-alcools d'une gamme de poids moléculaire de 61 à 499 à raison de 0 à 75 équivalents-% d'hydroxyle/amine par rapport à la quantité totale des composants b) et c), et
d) éventuellement des alcools d'un poids moléculaire de 800 à 10 000 présentant des unités oxyde d'éthylène incorporées dans des chaînes polyéther
en respectant un rapport des équivalents NCO/OH de 1,2:1 à 2,5:1, et en faisant réagir ensuite les prépolymères présentant des groupes isocyanates obtenus avec
e) des composés aminiques,
dans lequel
i) au moins une partie des composants b), c) et/ou e) contient des groupes sulfonate et/ou carboxylate incorporés ou des groupes acides pouvant être transformés en groupes sulfonate et/ou carboxylate par neutralisation, si bien que les produits de polyaddition de polyisocyanate présentent, éventuellement après une neutralisation desdits groupes ioniques potentiels, une teneur de 2 à 200 milliéquivalents de groupes carboxylate et/ou sulfonate chimiquement incorporés par 100 g de substance solide,
ii) éventuellement comme composant b) et/ou comme composant c) des composé organiques avec des unités oxyde d'éthylène en position latérale comprises dans des chaînes polyéther, et/ou les composants d) étant ajoutés en des quantités telles que les produits de polyaddition de polyisocyanate contiennent, par rapport aux substances solides, 0 à 25% en poids d'unités oxyde d'éthylène présentes dans des chaînes polyéther se trouvant en bout de chaîne et/ou en position latérale, et
iii) les produit de polyaddition de polyisocyanate sont obtenus en faisant réagir les prépolymères présentant des groupes isocyanate avec les composants e) en milieu aqueux et/ou organique,
dans lequel on utilise comme composant e) des composés monoamino primaires et/ou secondaires, éventuellement en mélange avec des composés diamino primaires ou secondaires d'un poids moléculaire jusqu'à 500, l'ammoniaque étant exclue, la fonctionnalité amino moyenne étant au total de 1-1,9, le rapport équivalent entre les groupes NCO dans le prépolymère NCO et les groupes amino réactifs à NCO est de 1,05:1 à 2,5:1 et le rapport équivalent entre les groupes NCO dans le prépolymère NCO et la quantité totale d'hydrogène réactif vis-à-vis des groupes isocyanate est de 0,5:1 à 0,98:1.

2. Utilisation des solutions et dispersions aqueuses selon la revendication 1 pour la préparation de colles.

3. Utilisation selon la revendication 2, caractérisée en ce que le composant e) est un mélange des composés di- et monoamino.

4. Utilisation selon la revendication 2, caractérisée en ce que l'on ajoute aux solutions ou dispersions 0,1 à 20 parties en poids d'au moins un composé polyisocyanate émulsifiable dans l'eau avec au moins deux groupes isocyanate libres, par 100 g de solution.

5. Colle à base aqueuse, contenant
100 parties en poids de solution ou dispersion selon la revendication 4 et
0,1 à 10 parties en poids d'un composé polyisocyanaté émulsifiable avec au moins deux groupes isocyanate libres.
